# EUROPÄISCHE PATENTSCHRIFT

(11) **EP 0 689 003 B1**
(45) Veröffentlichungstag und Bekanntmachung des Hinweises auf die Patenterteilung: **19.06.1996**
(21) Anmeldenummer: 94106076.6
(22) Anmeldetag: 19.04.1994
(51) Int. Cl.: F21V 17/00, F21S 1/10, F16B 21/02, E05B 63/14

(54) **Aussenleuchte**
Outdoor luminaire
Appareil d'éclairage pour l'extérieur

(43) Veröffentlichungstag der Anmeldung: 27.12.1995
(73) Patentinhaber: SIEMENS AKTIENGESELLSCHAFT, D-80333 München (DE)
(72) Erfinder: Schaffelhofer, Heinz, D-83365 Nussdorf (DE)

(56) Entgegenhaltungen:
- US-A- 3 654 453

## Beschreibung

Die Erfindung bezieht sich auf eine Außenleuchte gemäß dem Oberbegriff des Patentanspruches 1. Eine derartige Leuchte ist Z.B. aus Dokument US-A-3 654 453 bekannt.

Außenleuchten werden vielfach mit verhältnismäßig großen Lichtpunkthöhen eingesetzt, wodurch Montage- und Wartungsarbeiten besonders erschwert werden. Es ist daher eine Vielzahl von Lösungsversuchen bekannt, den Aufbau von Außenleuchten derart zu gestalten, daß die Arbeiten des Wartungspersonals möglichst sicher und einfach ausgeführt werden können. Nun ist aber zu berücksichtigen, daß gerade bei Außenleuchten in bezug auf die Betriebssicherheit hohe Anforderungen gestellt werden, d. h. unter anderem auch, daß die konstruktive Ausgestaltung im Aufbau einer Außenleuchte definierte Forderungen für bestimmte Schutzarten, insbesondere auch im Hinblick auf Staub- bzw. Spritzwasserdichtheit erfüllt. Für den Konstrukteur sind dies einander widersprechende Forderungen, mit denen er sich auseinandersetzen muß. Zwar wurde es bisher erreicht, Außenleuchten mit einem geschlossenen Gehäuse, einer die Lichtaustrittsöffnung umschließenden Abdeckwanne sowie einem Gehäusedeckel, häufig an der Unterseite der Leuchte angebracht, so auszubilden, daß bei Erfüllung der Bedingungen für die genannte Schutzart trotzdem eine relativ einfache Montage bzw. Wartung möglich war. Diese Aufgabe wurde allerdings bisher wegen des genannten Kompromisses nur unvollkommen gelöst. Entweder waren die Bedingungen für die gewünschte Funktionssicherheit nur annähernd erfüllt oder die Montagefreundlichkeit unvollkommen bzw. bei gegebener Montagefreundlichkeit die entsprechende konstruktive Ausgestaltung relativ aufwendig.

Der vorliegenden Erfindung liegt daher die Aufgabe zugrunde, eine Außenleuchte der eingangs genannten Art derart auszugestalten, daß diese Lösung sowohl die Bedingungen für die Schutzart "staub- und spritzwassergeschützt" eindeutig erfüllt, als auch eine Montage bzw. Demontage der Außenleuchte vor Ort auf eine möglichst einfache Weise, vorzugsweise werkzeuglos ermöglicht und dabei kostengünstig zu realisieren ist.

Bei einer Außenleuchte der eingangs genannten Art wird diese Aufgabe erfindungsgemäß gelöst durch die im Kennzeichen des Patentanspruches 1 beschriebenen Merkmale. Gemäß dieser Lösung wird eine einzige, manuell, also werkzeuglos betätigte Rastvorrichtung verwendet, um sowohl die Abdeckwanne als auch den Deckel, der Zugang zum Gehäuseinneren und damit dem elektrischen Zubehör ermöglicht, eindeutig an dem Gehäuse der Außenleuchte festzulegen. Die Rastvorrichtung funktioniert stufenweise, so daß sich nacheinander der Deckel und die Abdeckwanne schließen lassen. Dies bedeutet neben der Tatsache, daß der Monteur für diese Montageschritte keinerlei Werkzeug benötigt, ein besonders einfaches, schrittweises und schnelles Arbeiten. Bei heutigen Verkehrsverhältnissen einerseits und den relativ hohen Grundkosten für den Wartungsaufwand sind so erreichbare kurze Wartungszeiten für die einzelne Leuchte von besonderem Vorteil.

In Unteransprüchen beschriebene Weiterbildungen der Erfindung zeigen, daß sich eine betriebssichere, stufenweise und manuell betätigbare Rasteinrichtung zum Festlegen von Abdeckwanne und Deckel am Gehäuse der Außenleuchte auch mit konstruktiv einfachen Mitteln, mit kostengünstig herstellbaren Spritzgußteilen aus zähen Kunststoffen, wie Polyamid gegebenenfalls aber auch Metalldruckguß herstellen lassen.

Ein Ausführungsbeispiel der Erfindung wird im folgenden anhand der Zeichnung näher erläutert. Dabei zeigt:
Figur 1 und Figur 2 je eine Ansicht einer erfindungsgemäßen ausgebildeten Außenleuchte von unten bzw. von der Seite gesehen,
Figur 3 bzw. Figur 4 jeweils eine Querschnittsdarstellung eines Teilschnittes von Figur 2 in vergrößertem Maßstab sowie in zwei unterschiedlichen Positionen der dort gezeigten Rasteinrichtung,
Figur 5 und Figur 6 jeweils eine Einzeldarstellung eines an der Leuchtenunterseite angeordneten, von außen zugänglichen Drehknebels, der das Betätigungselement für die Rasteinrichtung ist,
Figur 7 die Darstellung eines Schnitts durch die Außenleuchte, der quer zu ihrer Längsachse in Höhe der Rasteinrichtung gelegt ist,
Figur 8 eine Einzeldarstellung einer mit dem Drehknebel formschlüssig verbundenen Führungsplatte und
Figur 9A bis Figur 11B ein Funktionsschema dieser Rasteinrichtung, in denen diese jeweils in definierten Schaltstellungen dargestellt ist.

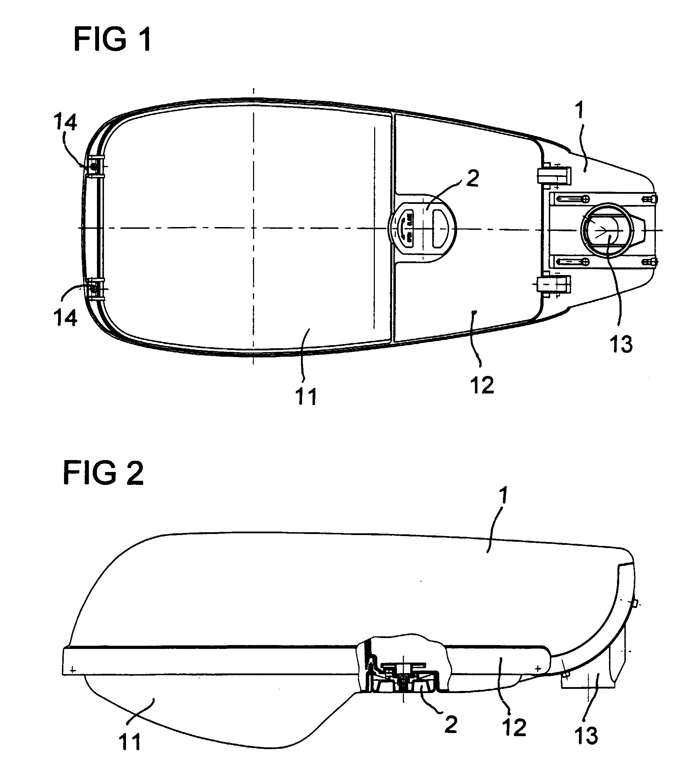

In Figur 1 und Figur 2 ist eine Außenleuchte in der Betriebslage in einer Ansicht der Unterseite bzw. in einer Seitenansicht dargestellt. Die Außenleuchte besitzt ein Gehäuse 1, an dessen Unterseite eine Abdeckwanne 11 die im Vorderteil der Außenleuchte liegende Lichtaustrittsöffnung staub- und spritzwassergeschützt umschließt. Auf der Unterseite der Außenleuchte ist, an die Abdeckwanne rückseitig anschließend ein Deckel 12 vorgesehen, der an dem Gehäuse 1 drehbar angelenkt ist. Leuchtenrückseitig ist an der Unterseite des Gehäuses 1 eine Befestigungsvorrichtung 13 vorgesehen, mit der die Außenleuchte an einem Lichtmast befestigbar ist. Über einen zentral angeordneten Rohrstutzen dieser Befestigungsvorrichtung 13 sind die elektrischen Versorgungsleitungen für die Außenleuchte durch den Lichtmast hindurch in das Leuchteninnere zuführbar.

Die Abdeckwanne 11 weist an ihrem Umfang einen an der Vorderseite und den Seitenflächen vorstehenden Wannenrand 111 auf, der z. B. an der Leuchtenvorderseite in zwei auf der Unterseite des Leuchtengehäuses festgelegte Wannenhalter 14 eingeschoben ist. Der Wannenrand 111 sowie eine entsprechend gestaltete Führungsfläche am Umfang der Unterseite des Gehäuses 1 bilden gemeinsam eine staub- und spritzwasserdichte Ausgestaltung der Anlageflächen der Abdeckwanne 11 am Gehäuse 1. Von den Wannenhaltern 14 abgewandt, ist der Wannenrand 111 der Abdeckwanne 11 rückseitig nach innen abgesetzt, wie der Teilschnitt von Figur 2 zeigt und noch im einzelnen zu erläutern sein wird. Er weist dabei eine in Umfangsrichtung nach außen gerichtete horizontale Anlagefläche 112 sowie einen in das Leuchteninnere gerichteten, vertikalen Dichtkeil 113 auf.

Der Abdeckwanne 11 benachbart, ist in dem Deckel 12 - als Teil einer Rasteinrichtung 2 zum Festlegen der Abdeckwanne 11 und des Deckels 12 selbst an dem Gehäuse 1 - ein Drehknebel 21 in die Unterseite des Deckels eingelassen und dort drehbar festgelegt. Wie Figur 1 und 2 erkennen lassen, besitzt dieser Drehknebel 21 einen Mittelsteg 210 sowie zwei zu dessen beiden Seiten liegende Griffmulden 211. Die Grundfläche des Drehknebels 21 ist etwa kreisförmig mit zwei zueinander parallel liegenden, abgeflachten Seitenkanten. Diese sind so ausgebildet, daß bei einer Drehung des Drehknebels um 90° entgegen dem Uhrzeigersinn eine dieser abgeflachten Seitenkanten 212 die Anlagefläche 112 des Wannenrandes 111 der Abdeckwanne 11 freigibt. Damit ist diese je nach Ausgestaltung der Wannenhalter 14 von dem Gehäuse 1 abnehmbar bzw. läßt sich nach unten abschwenken, wenn diese Wannenhalter 14 drehgelenkartig ausgebildet sind.

Wie noch im einzelnen zu erläutern sein wird, löst die Rasteinrichtung 2 auch den Deckel 12 bei einer über den 90°-Winkel hinausgehenden Drehung des Drehknebels 21 aus der Verriegelungsstellung am Gehäuse 1, so daß dann auch dieser Deckel 12 von dem Gehäuse 1 abschwenkbar ist bzw. in Einbaulage der Leuchte aufgrund seines Eigengewichtes von selbst nach unten herausklappt. Dabei werden - nicht dargestellt - eine Lichtquelle sowie elektrisches Zubehör, die beide am Deckel 12 auf dessen Leuchteninnenseite angeordnet sind, für Wartungs- bzw. Montagearbeiten frei zugänglich.

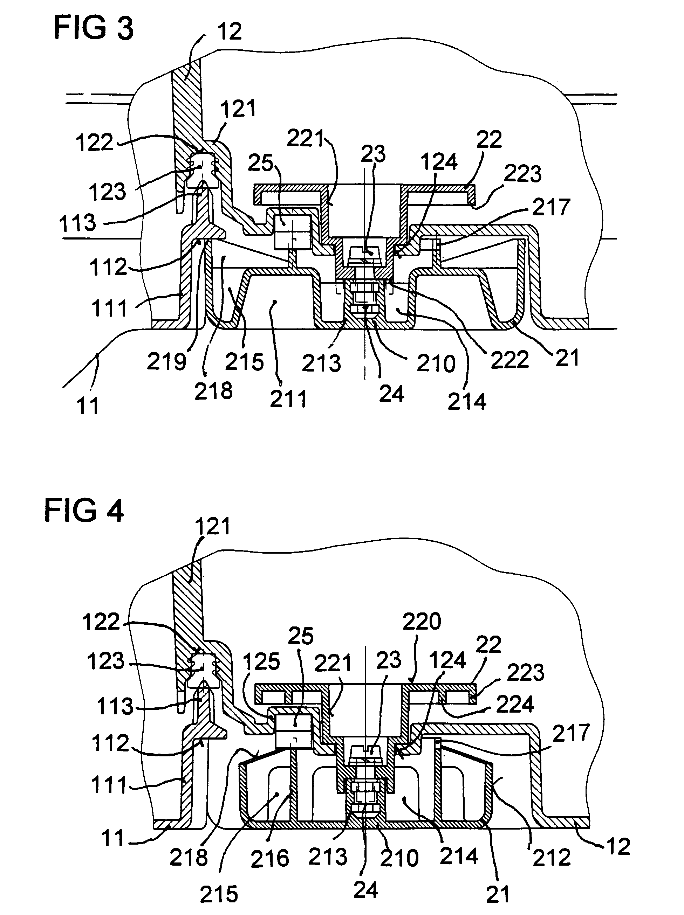

In Figur 3 sowie Figur 4 sind zur Verdeutlichung in größerem Maßstab zwei Detailansichten des Ausschnittes von Figur 2 für zwei zueinander um 90° verdrehte Positionen der Rasteinrichtung 2 dargestellt. In diesen Ausschnitten ist der Deckel 12 zu erkennen, der der Abdeckwanne 11 zugekehrt eine vertikal ausgerichtete, in das Leuchteninnere hineinragende Randseite 121 aufweist. In dieser ist eine vertikal ausgerichtete Tasche 122 in Form einer U-förmigen Verbreiterung des Querschnittes vorgesehen. In diese Tasche 122 ist ein Dichtungselement 123 eingelegt. Durch mehrfaches Abkröpfen der Querschnittsform des Deckels 12 wird eine Anlagefläche für die Rasteinrichtung 2 im Deckel 12 gebildet, die eine zentrale Lagerbohrung 124 zur Aufnahme der Rasteinrichtung 2 aufweist.

In dieser Lagerbohrung 124 ist der Drehknebel 21 gemeinsam mit einer Führungsplatte 22 festgelegt. Diese Führungsplatte 22 besitzt ein flanschartig ausgebildetes Oberteil 220, das an einen hohlen, im Querschnitt abgesetzten Lagerzapfen 221 horizontal angesetzt ist. Durch die Einschnürung dieses Lagerzapfens 221 ist eine Anlagefläche der Führungsplatte 22 im Bereich der Lagerbohrung 124 an die Innenseite des Deckels 12 gebildet. Im Boden des Lagerzapfens 221 ist eine axiale Bohrung 222 zur Aufnahme einer Befestigungsschraube 23 vorgesehen, mit der der Drehknebel 21 an der Führungsplatte 22 festgelegt wird. Dazu weist der Drehknebel 21 im Bereich seines Mittelsteges 210 einen zentralen Aufnahmezapfen 213 mit einer eingespritzten Gewindehülse 24 auf.

Um den Drehknebel 21 gegenüber der Führungsplatte 22 zu zentrieren, weist die Außenseite des Bodens des Lagerzapfens 221 eine ringförmige Einschnürung auf, die das Oberteil des Aufnahmezapfens 213 des Drehknebels 21 aufnimmt. Außerdem sind die Führungsplatte 22 und der Drehknebel 21 im montierten Zustand miteinander drehgesichert verbunden, wie Figur 3 zeigt. Der Drehknebel 21 weist nämlich senkrecht und quer zu seinem Mittelsteg 210 verlaufende Versteifungsrippen 214 bzw. 215 auf. Die innenliegenden Versteifungsrippen 214 sind in der Höhe etwas zurückgesetzt und ragen nicht über den Aufnahmezapfen 213 hinaus. Die eingeschnürte Aufnahmefläche des Lagerzapfens 221 der Führungsplatte 22 besitzt zwei Seitenschlitze 222, die die Außenkanten der inneren Versteifungsrippen 214 aufnehmen und damit die drehgesicherte, formschlüssige Verbindung zwischen Führungsplatte 22 und Drehknebel 21 schaffen.

Figur 3 und Figur 4 verdeutlichen weiterhin, daß die Rasteinrichtung 2 zwei zueinander um 90° gedrehte, definierte Rastpositionen besitzt. Um diese zu realisieren, weist der Drehknebel, nach innen gerichtet und koaxial zum Aufnahmezapfen 213 angeordnet, einen Zylinderring 216 auf, in dessen äußere Randfläche, zueinander jeweils um 90° versetzt, vier dreieckförmige Rastnasen 217 eingelassen sind. Diesen Rastnasen zugeordnet, ist eine als Blattfeder ausgebildete Rastfeder 25 vorgesehen, die sich mit ihrer Längsachse senkrecht zu den Ansichten von Figur 3 bzw. Figur 4 erstreckt und in eine rechteckförmige Aufnahmetasche 125 im Deckel 12 eingelegt ist. Diese Rastfeder 25 besitzt eine nach unten gerichtete, V-förmige Abkröpfung, die bei entsprechender Position des Drehknebels 21 jeweils in eine der Rastnasen 217 des Zylinderringes 216 federnd eingreift.

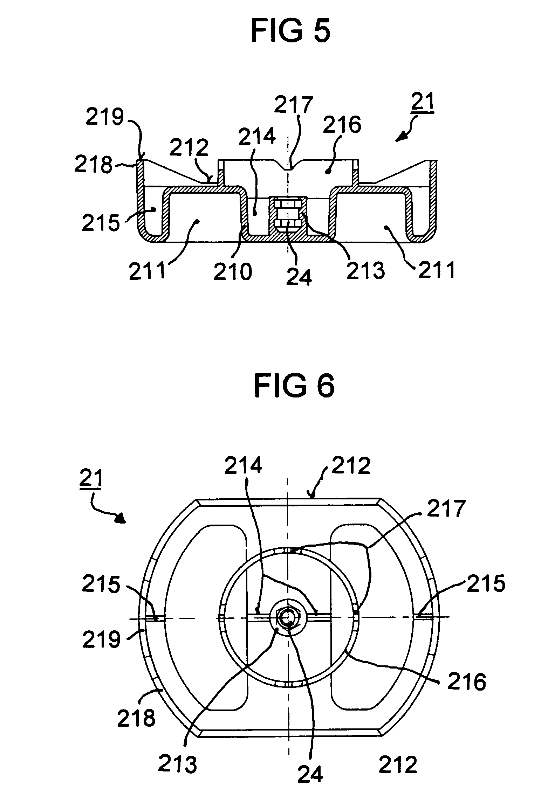

Die beiden Schnittdarstellungen von Figur 3 und Figur 4 verdeutlichen außerdem die Rastfunktion des Drehknebels 21 für die Abdeckwanne 11 in Verbindung mit Einzeldarstellungen des Drehknebels in den Figuren 5 und 6, aus denen Gestaltungsdetails besser erkennbar sind. Der Drehknebel 21 weist nämlich zusätzlich entsprechend der Außenkontur seiner Grundfläche verlaufende und senkrecht nach innen stehende, rippenartige Randflächen 218 auf. In den geraden Teilen der Kontur des Drehknebels 21 liegen die Innenkanten dieser Randflächen 218 tiefer und etwa in Höhe der Griffmulden 211 des Drehknebels 21. Von den Außenecken dieser geraden und horizontal liegenden Innenflächen steigen diese Randflächen 218 in den kreisförmigen Abschnitten zunächst linear an und gehen dann im Bereich der Mittelachse des Drehknebels 21 wieder in einen horizontal liegenden Flächenabschnitt über, der die Rastfläche 219 für die Anlagefläche 112 des Wannenrandes 111 bildet.

Figur 3 und Figur 4 zeigt nun in diesem Zusammenhang zwei zueinander um 90° verdrehte Positionen der Rasteinrichtung 2 bzw. des Drehknebels 21. In der in Figur 3 dargestellten Position liegt eine der kreisabschnittförmig ausgebildeten Randflächen 218 unter der Anlagefläche 112 des Wannenrandes 111 und drückt diesen damit mit ihrem Dichtkeil 113 gegen das in der Tasche 122 des Deckels 12 angeordnete Dichtungselement 123, so daß die Abdeckwanne 11 mit ihrem Wannenrand 111 staub- und spritzwasserdicht an dem Gehäuse 1 der Außenleuchte anliegt. In der in Figur 4 dargestellten Position dagegen ist der Drehknebel 21 mit seinen ebenen Teilen der Randflächen 218 parallel zur Rückseite der Abdeckwanne 11 ausgerichtet. Da diese ebenen Randflächen, bezogen auf den Umfang des Drehknebels 21 eingezogen sind, ist in dieser Position der rückseitige Teil des Wannenrandes 111 freigegeben, so daß diese von dem Gehäuse 1 der Außenleuchte abnehmbar bzw. abschwenkbar ist.

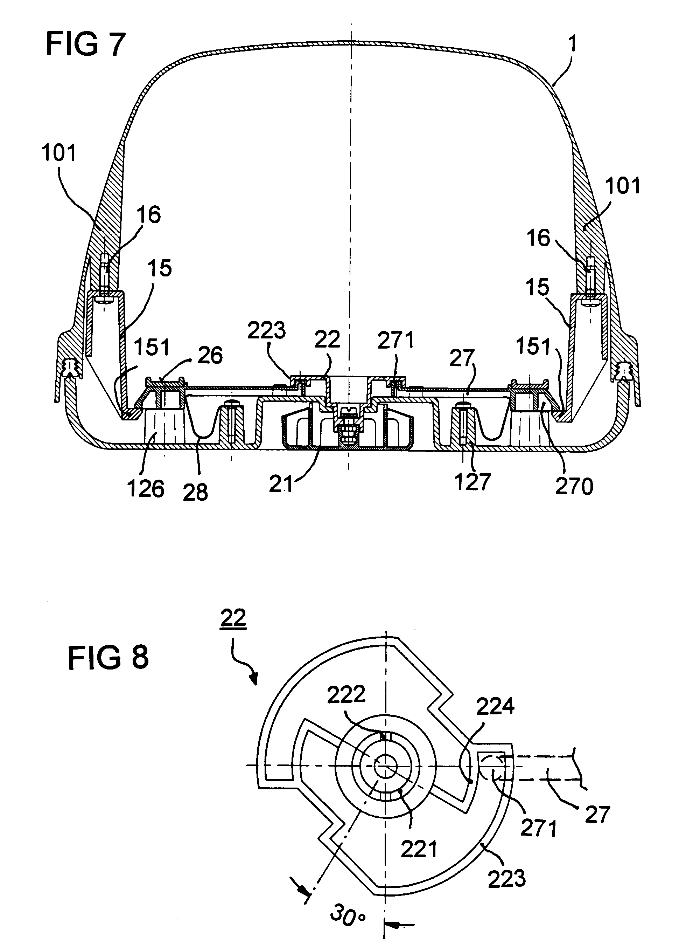

Aus der bisherigen Beschreibung ist die Funktion der Rasteinrichtung 2 in bezug auf die Festlegung des Deckels 12 am Leuchtengehäuse noch nicht entnehmbar. Deshalb ist in Figur 7 ein Schnitt durch das Leuchtengehäuse quer zu dessen Längsachse dargestellt, wobei die Lage der Schnittlinie in Figur 3 mit VII/VII verdeutlicht ist. Dieser Schnitt zeigt zunächst die Oberseite des Gehäuses 1 mit seinen Seitenflächen. Diese Seitenflächen weisen nach innen gerichtete, rippenartige Ansätze 101 auf, an denen eine Tragschiene, U-förmig ausgebildet, befestigt ist. Am unteren Ende der Tragschiene 15 ist eine nach innen gerichtete, von der Tragschiene senkrecht abstehende Arretiernase 151 vorgesehen.

Am Boden des Deckels 12 sind symmetrisch zur Mittelachse zwei Lagerböcke 126 angeordnet, die jeweils eine etwa U-förmig ausgebildete, quer zu der Darstellung von Figur 7 angeordnete Führungsschelle 26 tragen. In jede dieser Führungsschellen 26 ist eine stegförmig ausgebildete Schließfalle 27 eingeschoben, deren Längsachse parallel zur Schnittrichtung verläuft. Die Darstellung von Figur 7 verdeutlicht, daß die außenliegenden Enden dieser Schließfallen 27 rippenartig verstärkt ausgeführt sind. Sie weisen randseitig außerdem eine zurückspringende Außenkontur auf. Diese Außenkontur bildet beim Schließen des Deckels 12 eine Anlaufkante an der Arretiernase 151, die deshalb in analoger Weise angefast ist.

In der in Figur 7 gezeigten Position ist der Deckel 2 geschlossen, dabei hintergreifen die Außenkanten der Schließfallen 27 die Innenfläche der jeweils zugeordneten Arretiernase 151 der Tragschiene 15. Diese Rastposition des Deckels 12 gegenüber dem Gehäuse 1 der Außenleuchte wird durch zwei Biegefedern 28 gesichert, die einerseits in am Boden des Deckels 12 vorgesehenen Befestigungsaugen festgelegt sind und sich andererseits am Innenrand des rippenartig verstärkten Außenendes der Schließfallen 27 abstützen. Unter der Vorspannung dieser Biegefedern 28 werden die Schließfallen 27 jeweils nach außen gedrückt.

Die innenliegenden Endflächen der Schließfallen 27 weisen nach oben gerichtete vorstehende Führungszapfen 271 auf, die von der Bodenfläche der Führungsplatte 22 überdeckt werden. Die Führungsplatte 22 besitzt in Richtung ihrer Unterseite umgebogene Randrippen 223, die ihrer Außenkontur folgen und - wie noch zu zeigen sein wird - zum Teil durch innenliegende Rippen ergänzte Führungsflächen für die Führungszapfen 271 der Schließfallen 27. Ausgelöst durch eine Drehbewegung des Drehknebels 21 dreht sich die damit formschlüssig verbundene Führungsplatte und führt die Schließfallen 27 entgegen der Federvorspannung der Biegefedern 28 durch den Formschluß ihrer Randrippen 223 mit den Führungszapfen 271. Die Kontur der Randrippen 223 bestimmt damit die parallel zur Ansicht von Figur 7 erfolgende Hubbewegung der Schließfallen 27, wie im folgenden näher erläutert wird.

Figur 8 zeigt eine Draufsicht auf die Unterseite der Führungsplatte 22 mit den bereits beschriebenen Einzelheiten, die hier nicht wiederholt werden müssen. In die Darstellung von Figur 8 ist zur Verdeutlichung mit unterbrochenen Linien der Führungszapfen 271 einer der Schließfallen 27 in einer Position eingezeichnet, die der Position der Rasteinrichtung 2 von Figur 7 entspricht. Zunächst ist zu erkennen, daß - der Doppelfunktion der Führungsplatte 22 entsprechend - deren Unterseite spiegelsymmetrisch bezüglich einer Mittelachse ausgebildet ist. Die Randkontur der Führungsplatte 22 weist einen kreisabschnittförmigen Teil auf, der jeweils einen Quadranten umfaßt. Im Uhrzeigersinn betrachtet, schließen sich an diese kreisabschnittförmigen Teile der Randkontur der Führungsplatte 22 jeweils ein Geradenabschnitt an, dessen radialer Abstand, ausgehend von dem Übergangsbereich von der kreisbogenförmigen Außenkontur linear abnimmt.

Dies bedeutet, daß der von der Randkontur geführte Führungszapfen 271 der Schließfallen bei einer Drehbewegung der Führungsplatte 22 - entgegen dem Uhrzeigersinn in der Darstellung von Figur 8 gesehen - bei dem Entlanggleiten an der Randrippe 223 nach innen gezogen wird. Dieser geradlinige Bereich der Randrippen 223 kennzeichnet damit einen Winkelbereich von etwa 30°, in dem die Schließfallen 27 entgegen der Vorspannung der Biegefedern 28 nach innen gezogen werden, wobei dann der Deckel 22 ausgeklinkt wird, weil die Klinkenflächen der Außenecken 270 der Schließfallen 27 die Arretiernasen 151 nicht mehr hintergreifen.

Am anderen Ende dieses geradlinigen Abschnittes sind die Randrippen 223 radial nach innen abgewinkelt. Damit ist eine der beiden Endstellungen der Rasteinrichtung 2 gegeben, weil die Führungszapfen 271 ein Weiterdrehen des Drehknebels 21 sowie der mit ihm formschlüssig verbundenen Führungsplatte 22 verhindern. In der anderen Endposition, in der die Führungszapfen 271 der Schließfallen 27 in der in Figur 8 gezeigten Position stehen, sind schließlich die erwähnten innenliegenden Führungsrippen konzentrisch zu den Randrippen 223 verlaufend vorgesehen. Diese inneren Führungsrippen 224 verhindern in der Verriegelungsstellung ein etwa durch Bruch der Biegefedern 28 unvorhergesehenes Ausweichen der Schließfallen 27 nach innen. Diese Maßnahme erhöht die Betriebssicherheit durch Blockieren der Hubbewegung der Schließfallen 27 in der Verriegelungsstellung zusätzlich zu der vorspannenden Funktion der Biegefedern 28.

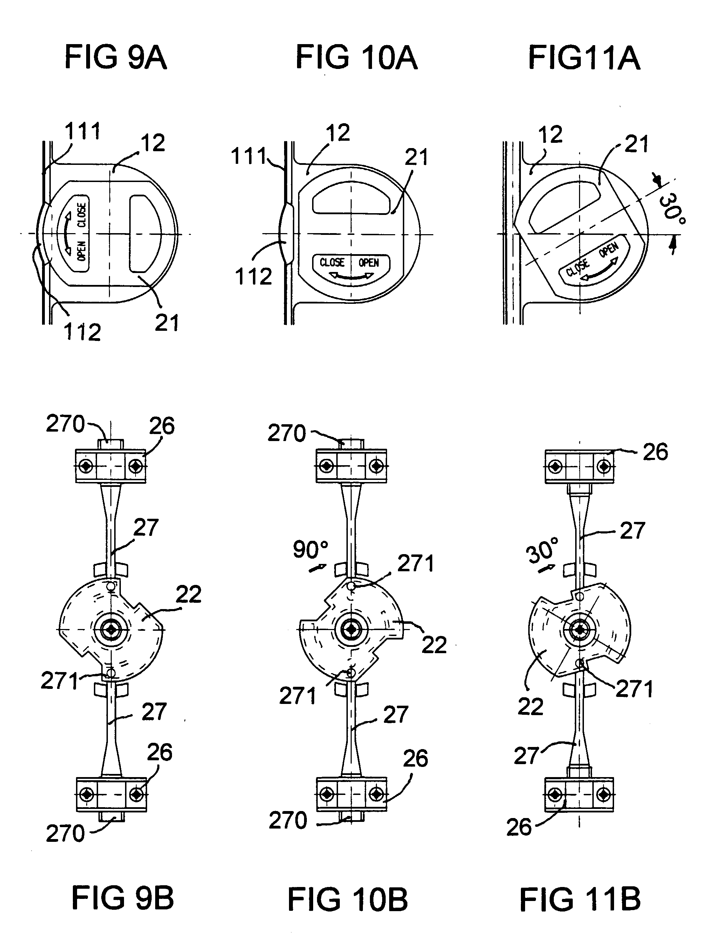

In der Zeichnung ist in den Figuren 9A, 9B, 10A, 10B sowie 11A, 11B in einer schematischen Abfolge die vorstehend beschriebene Funktionsweise der Rasteinrichtung 2 in Form einer Übersicht dargestellt. In den Figuren 9A, 10A sowie 11A ist jeweils eine definierte Stellung des Drehknebels 21 gezeigt, die entsprechenden Figuren 9B, 10B bzw. 11B illustrieren die diesen Drehknebelstellungen entsprechenden Positionen der Führungsplatte 22 sowie, dadurch bedingt, die jeweilige Stellung der Schließfallen 27.

Somit zeigen die beiden Figuren 9A und 9B die jeweilige Position des Drehknebels 21 bzw. der mit diesem formschlüssig verbundenen Führungsplatte 22 sowie der Schließfallen 27 in der Verriegelungsstellung der Rasteinrichtung. Die Randflächen 218 des Drehknebels 21 hintergreifen in dieser Position die Anlagefläche 112 des Wannenrandes 111, womit diese gesichert ist. Wie Figur 9B zeigt, sind in dieser Verriegelungsstellung auch die beiden Schließfallen 27 ausgerückt, was in dieser Darstellung dadurch verdeutlicht ist, daß die relative Position der Führungsschellen 26 zu den Außenecken 270 der Schließfallen 27 dargestellt ist.

In Figur 10A ist nun der Drehknebel 21 um 90° entgegen dem Uhrzeigersinn gedreht dargestellt. In dieser Schaltstellung des Drehknebels 21 ist der Wannenrand 111 mit samt seiner Anlagefläche 112 vom Drehknebel 21 freigegeben, so daß die Abdeckwanne 11 je nach Ausgestaltung ausschwenkbar bzw. abnehmbar ist. Wie Figur 10B für die gleiche Schaltstellung zeigt, haben die Schließfallen 27, durch die Führungsplatte 22 geführt, während dieser Drehbewegung von der Schaltstellung gemäß Figur 9B bis zu der in Figur 10B gezeigten Schaltstellung ihre Lage nicht geändert. Somit ist der Deckel 12 immer noch verriegelt.

Wird nun, wie in den Figuren 11A und 11B dargestellt, der Drehknebel nochmals um etwa 30° entgegen dem Uhrzeigersinn weitergedreht, so werden die Schließfallen 27 bei dieser Schaltbewegung nach innen zurückgezogen. Dabei gibt die Arretiernase 151 der Tragschiene 15 die Außenecken 270 frei, wie am besten aus Figur 7 erkennbar ist. Somit ist auch der Deckel 12 entriegelt und schwenkt in der Gebrauchslage der Außenleuchte aufgrund seines Eigengewichtes vom Gehäuse 1 ab.

Die in Figur 11A sowie 11B dargestellte Endstellung der Rasteinrichtung 2 bleibt nur solange erhalten, solange der Drehknebel 21 in dieser Position und entgegen der Vorspannung der auf die Schließfallen 27 einwirkenden Biegefedern 28 festgehalten wird. Sobald der Drehknebel 21 losgelassen wird, schnappt er aufgrund dieser Vorspannung in die in Figur 10A dargestellte Lage zurück. Wenn nun der Deckel 12 zum Schließen wieder an das Gehäuse 1 angedrückt wird, weichen die Schließfallen 27, an der Anlaufkante der zugeordneten Arretiernase 151 entlanggleitend, zurück und schnappen dann mit ihren Außenecken 270 hinter der entsprechenden Arretiernase 151 ein. In Figur 10B ist dies schematisch durch eine in unterbrochenen Linien dargestellte Position der entsprechenden Führungszapfen 271 der Schließfallen 27 kurz vor diesem Einschnappvorgang angedeutet. Somit arretiert sich der Deckel 12 beim Andrücken an das Gehäuse 1 selbsttätig. Um auch die Abdeckwanne 11 zu verriegeln, ist diese an das Gehäuse 1 anzudrücken und der Drehknebel, nun im Uhrzeigersinn, um 90° in seine Verriegelungsstellung zu drehen.

## Patentansprüche

1. Außenleuchte mit einer in einem Gehäuse (1) samt elektrischem Zubehör geschützt angeordneten Lichtquelle, mit einer auf der Leuchtenunterseite lösbar angeordneten, die Lichtaustrittsöffnung abdeckenden Abdeckwanne (11) und einem drehbar am Gehäuse angelenkten Deckel (12), der die Lichtquelle samt dem elektrischen Zubehör trägt und mit einer gemeinsamen Befestigungsvorrichtung (2) für die Abdeckwanne und den Deckel, die zu Montagezwecken lösbar am Gehäuse festgelegt sind, **dadurch gekennzeichnet**, daß die gemeinsame Befestigungsvorrichtung für die Abdeckwanne und den Deckel als eine manuell und stufenweise lediglich über einen Drehknebel (21) betätigbare Rastvorrichtung (2) ausgebildet ist, die in einer ersten Schaltstufe zunächst die Abdeckwanne und erst in einer anschließenden, weiteren Schaltstufe den Deckel zum Ausschwenken freigibt.

2. Außenleuchte nach Anspruch 1, **dadurch gekennzeichnet**, daß die Rastvorrichtung (2) in dem Deckel (12) angeordnet ist, neben dem von der Leuchtenaußenseite zugänglichen Drehknebel (21) eine im Gehäuseinneren angeordnete Führungsplatte (22) besitzt, die beide miteinander starr verbunden in dem Deckel, der Abdeckwanne (11) zugekehrt, drehbeweglich angeordnet sind und außerdem mindestens eine unter Federdruck vorgespannte Schließfalle (27) aufweist, die an einem Ende (271) formschlüssig mit der Führungsplatte verbunden ist und daß gehäuseseitig mindestens eine Arretiernase (151) vorgesehen ist, hinter der das andere Ende (272) der zugeordneten Schließfalle im verriegelten Zustand rastend einklinkt.

3. Außenleuchte nach Anspruch 2, **dadurch gekennzeichnet**, daß die Rasteinrichtung (2) ein Paar von Schließfallen (27) aufweist, die auf der Innenseite des Deckels, parallel dazu und quer zur Leuchtenlängsrichtung längsbeweglich geführt, angeordnet sind sowie an dem der Führungsplatte (22) zugekehrten Ende je einen Führungszapfen(271) aufweisen, der der Außenkontur der Führungsplatte (22) folgend mit dieser formschlüssig gekoppelt ist.

4. Außenleuchte nach Anspruch 3, **dadurch gekennzeichnet**, daß die Schließfallen (27) durch Versteifungsrippen verstärkte Außenenden (270) aufweisen und je eine Führungsschelle (26), am Boden des Deckelinnern festgelegt, vorgesehen ist, in der jeweils eines dieser Außenenden der Schließfallen längsbeweglich geführt ist.

5. Außenleuchte nach Anspruch 4, **dadurch gekennzeichnet**, daß den Schließfallen (27) jeweils eine diese in Richtung der zugeordneten Arretiernase (151) vorspannende Biegefeder (28) vorgesehen ist, die einseitig am Inneren des Deckels (12) festgelegt ist und mit ihrem freien Ende an dem verstärkten Außenende (270) der zugeordneten Schließfalle federnd anliegt.

6. Außenleuchte nach einem der Ansprüche 2 bis 5, **dadurch gekennzeichnet**, daß die Führungsplatte (22) eine Führungskontur (223) für den daran formschlüssig geführten Führungszapfen (271), der mindestens einen Schließfalle (27) aufweist, die für den Drehwinkelbereich der Rasteinrichtung (2) aus der Verriegelungsposition in die Freigabeposition für die Abdeckwanne (11) im wesentlichen einen Kreisbogenabschnitt bildet, an den sich, in Drehrichtung gesehen, eine geradlinige Teilstrecke anschließt, die mit kontinuierlich abnehmendem Abstand zum Drehmittelpunkt der Führungsplatte quer zu dieser verläuft und in einem radial gerichteten Absatz endet, der die Freigabestellung der Rasteinrichtung für den Deckel (12) definiert und zugleich eine Stopposition für den Führungszapfen der Schließfalle und damit der gesamten Rasteinrichtung bildet.

7. Außenleuchte nach einem der vorhergehenden Ansprüche, **dadurch gekennzeichnet**, daß der Drehknebel (21) auf der Außenseite einen flachen Mittelsteg (210) sowie zu dessen beiden Seiten je eine Griffmulde aufweist, eine im wesentlichen kreisförmige Querschnittsform besitzt, die zumindestens eine abgeflachte Sekante aufweist und bezüglich eines dem Drehknebel (21) zugekehrten Teiles des Randes (111) der Abdeckwanne (11), der eine Anlagefläche (112) aufweist, in dem Deckel (12) so angeordnet ist, daß er, mit seiner kreisförmigen Außenkontur diese Anlagefläche der Abdeckwanne überdeckend, die Abdeckwanne arretiert und nur in einer definierten Drehposition, der Freigabestellung, mit dem abgeflachten Teil seiner Außenkontur diese Anlagefläche der Abdeckwanne freigibt.

8. Außenleuchte nach Anspruch 7, **dadurch gekennzeichnet**, daß der Drehknebel (21) topfartig mit hochgezogenen Seitenwänden ausgebildet ist, deren Wandhöhe im Bereich des abgeflachten Teiles der Außenkontur niedriger ist und im Sinne einer Auflauffläche gleichmäßig ansteigend dort die maximale Wandhöhe aufweist, wo der Drehknebel in der Verriegelungsstellung unter der Anlagefläche (112) des Wannenrandees (111) eingreift.

9. Außenleuchte nach Anspruch 7 oder 8, **dadurch gekennzeichnet**, daß der Drehknebel (21) einen gegen die Außenseite des Deckels (12) gerichteten, zur Drehknebelachse koaxial angeordneten Zylinderring (216) aufweist, in dessen Randfläche, definierten Drehstellungen des Drehknebels zugeordnet, Rastnasen (217) eingelassen sind und daß in einer diesem Zylinderring gegenüberliegenden, in den Deckel eingelassenen flachen Tasche eine Rastfeder (25) angeordnet ist, die auf die Rastnasen einwirkend, definierte Raststellungen des Drehknebels in der Freigabe- bzw. der Verriegelungsposition festlegt.

10. Außenleuchte nach einem der Ansprüche 2 bis 9, **dadurch gekennzeichnet**, daß zum Versteifen der montierten Außenleuchte an Verstärkungsrippen (101) der Innenseiten des Gehäuses eine Tragschiene (15) festgelegt ist, die an ihrem freien Ende die quer zur Leuchtenlängsachse weisenden Arretiernasen (151) trägt.

## Claims

1. Exterior luminaire having a light source arranged in a protected fashion in a housing (1) together with electrical accessories, having a diffuser (11), which is detachably arranged on the luminaire underside and covers the light exit opening, and a cover (12), which is rotatably pivoted on the housing and supports the light source together with the electrical accessories, and having a common fastening device (2) for the diffuser and the cover, which are detachably fixed on the housing for installation purposes, characterized in that the common fastening device for the diffuser and the cover is constructed as a latching device (2) which can be operated manually and in steps only via a finger-grip knob (21) and initially releases the diffuser in a first switch step and releases the cover to be swung out only in a subsequent, further switch step.

2. Exterior luminaire according to Claim 1, characterized in that the latching device (2) is arranged in the cover (12) which, in addition to the finger-grip knob (21) accessible from the outside of the luminaire, has a guide plate (22) arranged in the housing interior, the two of which are rotatably arranged, facing the diffuser (11) in a manner rigidly connected to one another in the cover, and has in addition at least one closing trap (27) which is pretensioned under spring pressure and is connected at one end (271) to the guide plate in a self-closed fashion, and in that on the housing side at least one arresting nose (151) is provided behind which the other end (272) of the assigned closing trap locks home in a latching fashion in the locked state.

3. Exterior luminaire according to Claim 2, characterized in that the latching device (2) has a pair of closing traps (27) which are arranged on the inside of the cover, parallel thereto, and guided capable of moving longitudinally transverse to the longitudinal direction of the luminaire, and have on the end facing the guide plate (22) one guide pin (271) each which follows the outer contour of the guide plate (22) and is coupled thereto in a self-closed fashion.

4. Exterior luminaire according to Claim 3, characterized in that the closing traps (27) have outer ends (270) which are strengthened by reinforcing ribs, and there is provided, fixed on the floor of the cover interior, one guide clip (26) each in which one of these outer ends of the closing traps is respectively guided capable of moving longitudinally.

5. Exterior luminaire according to Claim 4, characterized in that the closing traps (27) are provided in each case with a spiral spring (28) which pretensions the said traps in the direction of the assigned arresting nose (151) and is fixed at one end on the interior of the cover (12) and bears resiliently with its free end against the strengthened outer end (270) of the assigned closing trap.

6. Exterior luminaire according to one of Claims 2 to 5, characterized in that the guide plate (22) has a guide contour (223) for the guide pin (271), which is guided in a self-closed fashion thereon and has at least one closing trap (27) which essentially forms for the range of the angle of rotation of the latching device (2) from the locking position into the release position for the diffuser (11) a circular arc section which, seen in the direction of rotation, is adjoined by a rectilinear segment which extends with a continuously decreasing distance from the rotational centre of the guide plate and transverse to the latter and ends in a radially directed step which defines the release position of the latching device for the cover (12) and at the same time forms a stop position for the guide pin of the closing trap and thus of the entire latching device.

7. Exterior luminaire according to one of the preceding claims, characterized in that the finger-grip knob (21) has on the outside a flat central web (210) and, to both sides thereof, one gripping depression each which has an essentially circular cross-sectional shape, has at least one flattened secant and is arranged in the cover (12) in relation to a part, facing the finger-grip knob (21), of the edge (111) of the diffuser (11) which has a bearing surface (112), in such a way that it arrests the diffuser in a fashion covering this bearing surface of the diffuser with its circular outer contour, and releases this bearing surface of the diffuser only in a defined rotary position, the release position, by means of the flattened part of its outer contour.

8. Exterior luminaire according to Claim 7, characterized in that the finger-grip knob (21) is constructed like a pot with side walls which are drawn up and whose wall height is lower in the region of the flattened part of the outer contour and, rising uniformly to provide an abutting surface, has the maximum wall height where the finger-grip knob engages in the locked position below the bearing surface (112) of the diffuser edge (111).

9. Exterior luminaire according to Claim 7 or 8, characterized in that the finger-grip knob (21) has a cylindrical ring (216) which is directed against the outside of the cover (12) and is arranged coaxially with the axis of the finger-grip knob and into whose edge surface latching noses (217) are fitted in a fashion assigned to defined rotary positions of the finger-grip knob, and in that there is arranged in a flat pocket, situated opposite this cylindrical ring and recessed into the cover a latching spring (25) which, acting on the latching noses, fixes defined latching positions of the finger-grip knob in the release position and the locking position, respectively.

10. Exterior luminaire according to one of Claims 2 to 9, characterized in that for the purpose of reinforcing the installed exterior luminaire a support rail (15), which supports the arresting noses (151), which point transverse to the longitudinal axis of the luminaire, on its free end, is fixed on strengthening ribs (101) of the inside of the housing.

## Revendications

1. Appareil d'éclairage pour l'extérieur doté d'une source de lumière disposée de façon protégée, avec les équipements électriques, dans un boîtier (1), d'une vasque (11) disposée de façon démontable sur la face inférieure de l'appareil d'éclairage et recouvrant l'orifice de rayonnement de la lumière et d'un couvercle (12) assemblé de façon articulée au boîtier qui porte la source de lumière et les équipements électriques, ainsi que d'un dispositif de fixation commun (2) pour la vasque et le couvercle qui sont fixés de façon démontable au boîtier à des fins de montage, **caractérisé en ce que** le dispositif de fixation commun destiné à la vasque et au couvercle est réalisé en tant que dispositif d'arrêt (2) commandé manuellement et par paliers par une simple manette rotative (21), lequel dispositif d'arrêt libère dans un premier palier de commutation tout d'abord la vasque, puis, dans un autre palier de commutation suivant, le couvercle à des fins de pivotement.

2. Appareil d'éclairage pour l'extérieur selon la revendication 1, **caractérisé en ce que** le dispositif d'arrêt (2) est disposé dans le couvercle (12), possède, outre la manette rotative (21) accessible de l'extérieur de l'appareil d'éclairage, une plaque de guidage (22) disposée à l'intérieur du boîtier, ces deux éléments étant reliés de façon fixe, disposés dans le couvercle de façon à pouvoir décrire un mouvement de rotation et orientés vers la vasque (11) et présente de surcroît au moins un loquet de fermeture (27) soumis à une prétension par force de ressort qui, à une extrémité (271), est assemblé par entraînement positif avec la plaque de guidage, et en ce qu'est prévu, du côté du boîtier, au moins un nez d'arrêt à l'arrière duquel l'autre extrémité (272) du loquet de fermeture s'enclenche par déclic à l'état verrouillé.

3. Appareil d'éclairage pour l'extérieur selon la revendication 2, **caractérisé en ce que** le dispositif d'arrêt (2) comporte une paire de loquets de fermeture (27) qui sont disposés sur la face intérieure du couvercle, parallèlement à cette face de manière à être guidés transversalement au sens longitudinal de l'appareil dans un mouvement longitudinal, et qui présentent, à l'extrémité orientée vers la plaque de guidage (22), respectivement un téton de guidage (271) qui, suivant le contour extérieur de la plaque de guidage, est accouplé par entraînement positif à cette dernière.

4. Appareil d'éclairage pour l'extérieur selon la revendication 3, **caractérisé en ce que** les loquets d'arrêt (27) présentent des extrémités extérieures renforcées (270) par des nervures de renforcement et en ce que respectivement un collier de guidage (26) fixé au fond de l'intérieur du couvercle est prévu au sein duquel respectivement une de ces extrémités extérieures des loquets de fermeture est guidée dans un mouvement longitudinal.

5. Appareil d'éclairage pour l'extérieur selon la revendication 4, **caractérisé en ce que** pour les loquets de fermeture (27), respectivement un ressort à flexion (28) est prévu qui soumet ces loquets à une prétension en direction du nez d'arrêt (151) correspondant, lequel ressort est fixé d'un côté à l'intérieur du couvercle (12) et repose de façon élastique, avec son extrémité libre, contre l'extrémité extérieure renforcée (270) du loquet de fermeture correspondant.

6. Appareil d'éclairage pour l'extérieur selon l'une quelconque des revendications 2 à 5, **caractérisé en ce que** la plaque de guidage (22) présente un contour de guidage (223) pour le téton de guidage (271) y étant assemblé par entraînement positif qui comporte au moins un loquet de fermeture (27) formant, pour l'écart angulaire du dispositif d'arrêt (2) de la position de verrouillage à la position de libération pour la vasque (11), essentiellement un morceau d'arc de cercle suivi, dans le sens de rotation, d'un morceau de ligne droite évoluant, à une distance diminuant continuellement du centre de rotation de la plaque de guidage, transversalement à ladite plaque et se terminant par un épaulement radial qui définit la position de libération du dispositif d'arrêt pour le couvercle (12) et constitue simultanément une position d'immobilisation pour le téton de guidage du loquet de fermeture et, par conséquent, de l'ensemble du dispositif d'arrêt.

7. Appareil d'éclairage pour l'extérieur selon l'une des revendications précédentes, **caractérisé en ce que** la manette rotative (21) présente sur sa face extérieure une traverse centrale aplatie (210) ainsi que, des deux côtés de cette traverse, respectivement un encastrement de poignée, possède une section essentiellement circulaire qui comporte au moins une sécante aplatie et, par rapport à une partie du rebord (111) de la vasque (11) orientée vers la manette (21) qui présente une surface de contact (112), est disposée dans le couvercle (12) de telle sorte que, couvrant cette surface de contact de la vasque avec son contour extérieur, il bloque la vasque et ne libère cette surface de contact de la vasque, au moyen de la partie aplatie de son contour extérieur, que dans une position de rotation donnée, à savoir la position de libération.

8. Appareil d'éclairage pour l'extérieur selon la revendication 7, **caractérisé en ce que** la manette rotative (21) est réalisée, comme un récipient, avec des parois latérales remontantes dont la hauteur est plus réduite dans la zone de la partie aplatie du contour extérieur et atteint son point le plus haut, en montant régulièrement comme une surface d'amenée, à l'endroit où la manette rotative s'enclenche en position de verrouillage au-dessous de la surface de contact (112) du rebord (111) de la vasque.

9. Appareil d'éclairage pour l'extérieur selon la revendication 7 ou 8, **caractérisé en ce que** la manette rotative (21) présente un anneau cylindrique (216) orienté vers la face extérieure du couvercle (12) et disposé de façon coaxiale par rapport à l'axe de la manette rotative, dans la surface marginale duquel sont insérés des nez d'arrêt assignés à des positions de rotation définies de la manette rotative, et en ce que dans une poche encastrée dans le couvercle et située en face de cet anneau cylindrique, un ressort à cran d'arrêt (25) est prévu qui, agissant sur les nez d'arrêt, fixe des positions d'arrêt définies de la manette rotative en position de libération ou de verrouillage.

10. Appareil d'éclairage pour l'extérieur selon l'une quelconque des revendications 2 à 9, **caractérisé en ce que**, afin de renforcer l'appareil d'éclairage pour l'extérieur monté, un rail-support (15) est fixé à des nervures de renforcement (101) sur les faces intérieures du boîtier, ce rail-support portant à son extrémité libre les nez d'arrêt (151) orientés transversalement à l'axe longitudinal de l'appareil d'éclairage.
